# EUROPÄISCHE PATENTANMELDUNG

(11) **EP 2 070 773 A1**
(43) Veröffentlichungstag der Anmeldung: **17.06.2009**
(21) Anmeldenummer: 08105632.7
(22) Anmeldetag: 23.10.2008
(51) Int. Cl.: B60R 21/0132, B60C 23/00

(54) **Verfahren und Anordnung zur Aktivierung von Insassenschutzmitteln eines Insassenschutzsystems in einem Fahrzeug**

(30) Priorität: 11.12.2007 DE 102007059553
(71) Anmelder: ROBERT BOSCH GMBH, 70442 Stuttgart (DE)
(72) Erfinder: Mehl, Volker, 76356, Weingarten (DE); Stabrey, Stephan, 70174, Stuttgart (DE)

(57) **Zusammenfassung**

Die Erfindung betrifft ein Verfahren zur Aktivierung von Insassenschutzmitteln (25) in einem Fahrzeug (1), bei welchem zur Erkennung eines Unfalls unfallrelevante Informationen erfasst und ausgewertet werden, und eine zugehörige Anordnung zur Durchführung des Verfahrens. Erfindungsgemäß werden an den Rädern (3, 4, 5, 6) des Fahrzeugs (1) zusätzliche Informationen erfasst, aus welchen Kräfte ermittelt werden, welche über die Räder (3, 4, 5, 6) auf das Fahrzeug (1) wirken, wobei Informationen über die ermittelten Radkräfte zur Erkennung eines Unfalls und zur Aktivierung der Insassenschutzmittel (25) und/oder von anderen aktiven Sicherheitssystemen ausgewertet werden.

## Beschreibung

### Stand der Technik

Die Erfindung geht aus von einem Verfahren zur Aktivierung von Insassenschutzmitteln eines Insassenschutzsystems in einem Fahrzeug nach der Gattung des unabhängigen Patentanspruchs 1 und von einer zugehörigen Anordnung zur Aktivierung von Insassenschutzmitteln eines Insassenschutzsystems in einem Fahrzeug.

Aktive und passive Insassenschutzsysteme spielen bei der Fortentwicklung von Fahrzeugen eine immer größer werdende Rolle. Um eine optimale Schutzwirkung erzielen zu können, ist eine sehr frühe Unfallerkennung erforderlich. Grundlage für eine solche Unfallerkennung und die Aktivierung der Insassenschutzsysteme bilden Sensorsysteme, die einen oder mehrere Sensoren umfassen, die beispielsweise zu einer oder mehren Sensoreinheiten zusammengefasst sind und deren Signale zur Erkennung eines Aufpralls mit einem Objekt und/oder zur Erkennung eines Überschlags des Fahrzeugs ausgewertet werden, um anschließend Insassenschutzmittel zu aktivieren, welche als irreversible Rückhaltesysteme, wie z. B. Airbags oder pyrotechnische Gurtstraffer, und/oder reversible Rückhaltesysteme, wie z. B. elektromotorische Gurtstraffer, ausgeführt sein können. Für die einzelnen Sensoren können die verschiedensten Sensorprinzipien, wie beispielsweise Beschleunigungs-, Druck-, Körperschallsensoren, piezoelektrische und/oder optische Sensoren usw. benutzt werden. Die Auslösung der irreversiblen Rückhaltesysteme sollte nur in echten Gefahrenfällen, den so genannten Use-Fällen erfolgen. Das Insassenschutzsystem muss diese Fälle von so genannten Misuse-Fällen, wie beispielsweise einem seitlichen Bordsteinanprall oder einer Bordsteinüberfahrt, unterscheiden, da hier keine irreversiblen Rückhaltemittel ausgelöst werden sollen. Da die gemessenen Bewegungssignale in den genannten Fällen sehr ähnlich sein können, ist eine zuverlässige Unterscheidung von Use-Fällen und Misuse-Fällen sehr schwierig.

Zunehmend werden aktive Fahrzeugsicherheitssysteme während eines erkannten Unfallgeschehen eingesetzt, um unfallfolgenmindernd in die Fahrzeugbewegung einzugreifen. So ist beispielsweise eine Sicherheitsfunktion bekannt, die ausgelöst vom Insassenschutzsystem nach der Erkennung einer ersten Kollision eine Bremsung auslöst, um mögliche Folgekollisionen zu vermeiden bzw. deren Schwere zu reduzieren. Die Verfügbarkeit dieser Funktion ist nur dann gegeben, wenn die Beschädigungen am Fahrzeug nicht zu schwerwiegend sind, also insbesondere die Bremshydraulik sowie Räder und Radaufhängungen durch die erste Kollision nicht zerstört wurden. Liegt ein solcher Defekt z. B. an einem Rad vor, kann beim Versuch das Fahrzeug abzubremsen Bremsflüssigkeit verloren gehen und dadurch auch ein Abbremsen der intakten Räder unmöglich werden. Starke Beschädigungen am Fahrzeug können bei einer autonomen Bremsung auch dazu führen, dass die Bremskräfte an beide Seiten des Fahrzeugs unterschiedlich sind und dadurch ein Drehmoment um die Fahrzeughochachse entsteht, das destabilisierend wirken kann.

Zudem wird in der Offenlegungsschrift JP 2006096191A eine Detektiervorrichtung beschrieben, die mit Hilfe von Kraftdetektiersensoren, welche die wirkenden Kräfte an den vier Rädern detektieren, an den Rädern angelegte Bremsklötze detektiert.

### Offenbarung der Erfindung

Das erfindungsgemäße Verfahren zur Aktivierung von Insassenschutzmitteln eines Insassenschutzsystems mit den Merkmalen des unabhängigen Patentanspruchs 1 hat demgegenüber den Vorteil, dass an den Rädern des Fahrzeugs zusätzliche Informationen erfasst werden, aus welchen Kräfte ermittelt werden, welche über die Räder auf das Fahrzeug wirken. Diese Informationen über die ermittelten Radkräfte werden in vorteilhafter Weise zusätzlich zu erfassten unfallrelevante Informationen, die beispielsweise von mindestens einem Sensor des Insassenschutzsystems erfasst werden, zur Erkennung eines Unfalls und zur Aktivierung der Insassenschutzmittel und/oder von anderen aktiven Sicherheitssystemen ausgewertet.

Zur Durchführung des erfindungsgemäßen Verfahrens kann eine Anordnung zur Aktivierung von Insassenschutzmitteln eines Insassenschutzsystems in einem Fahrzeug verwendet werden, wobei das Insassenschutzsystem mindestens einen Sensor zur Erfassung von unfallrelevanten Informationen und eine Auswerte- und Steuereinheit umfasst, welche die erfassten unfallrelevanten Informationen zur Erkennung eines Unfalls auswertet. Erfindungsgemäß erfasst mindestens ein Radsensor eines Radkraftsensorsystems zusätzliche Informationen, aus welchen Kräfte ermittelbar sind, welche über die Räder auf das Fahrzeug wirken, wobei die Auswerte- und Steuereinheit des Insassenschutzsystems zur Erkennung eines Unfalls und zur Aktivierung der Insassenschutzmittel und/oder von anderen aktiven Sicherheitssystemen auch die ermittelten Radkräfte auswertet.

Der Kern der Erfindung besteht in der Nutzung von in Fahrzeugen verbauten Radsensoren zur Kollisionserkennung bzw. Unfallerkennung. Diese Radsensoren ermitteln die über die Räder auf das Fahrzeug wirkenden Radkräfte. Wird ein Fahrzeug bei einem Unfall in der Nähe von tragenden Strukturen getroffen, lässt sich der Aufprall mit den bekannten Sensoren des Insassenschutzsystems vergleichsweise gut detektieren. Wird ein Fahrzeug hingegen am nicht sehr steifen Stoßfänger getroffen, führt dies zunächst nicht zu besonderes großen Signalen der bekannten Sensoren des Insassenschutzsystems, so dass eine Unfallerkennung nur mit den Sensoren des Insassenschutzsystems schwierig ist. Wird jedoch, beispielsweise durch die Deformation des Radkastens, zusätzlich das Rad in Mitleidenschaft gezogen, kann dies mit Hilfe des Radkraftsensorsystems erkannt werden, so dass in vorteilhafter Weise an die erkannte Situation angepasste Schutzmaßnahmen ausgelöst werden können und der Insassenschutz erhöht werden kann.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Aktivierung von Insassenschutzmitteln eines Insassenschutzsystems in einem Fahrzeug und der im unabhängigen Patentanspruch 6 angegebenen Anordnung zur Aktivierung von Insassenschutzmitteln eines Insassenschutzsystems in einem Fahrzeug möglich.

Besonders vorteilhaft ist, dass die Informationen über die ermittelten Radkräfte zur Unterscheidung von Gefahrenfällen, in welchen die Insassenschutzmittel aktiviert werden, und von Misuse-Fällen ausgewertet werden, in welchen die Insassenschutzmittel nicht aktiviert werden. Durch die kombinierte Auswertung der Informationen des mindestens einen Sensors des Insassenschutzsystems und des mindestens einen Radsensors wird in vorteilhafter Weise eine bessere Unterscheidung von Misuse- und Use-Fällen ermöglicht, da durch die ermittelten über die Räder auf das Fahrzeug wirkenden Radkräfte, Misuse-Fälle, wie Borsteinanprallen oder Bordsteinüberfahrten, nahezu sicher von echten Unfällen unterschieden werden können, weil sich die von dem mindestens einen Sensor des Insassenschutzsystems ermittelten Bewegungsgrößen auf die ermittelten Radkräfte zurückführen lassen. Durch die verbesserte Unterscheidung kann die Unfallerkennung innerhalb des Insassenschutzsystems empfindlicher eingestellt werden, so dass beispielsweise reversible Rückhaltemittel oder Assistenzfunktionen auch bei leichteren Unfällen angesteuert werden können.

In Ausgestaltung des erfindungsgemäßen Verfahrens können die Informationen über die ermittelten Radkräfte zur Ermittlung von Unfallschäden am Fahrwerk des Fahrzeugs ausgewertet werden. Von besonderem Vorteil ist, dass mit Hilfe der Radsensoren direkt die auf das Fahrwerk wirkenden Kräfte gemessen werden können. Unter Berücksichtung von konstruktiv bedingten Eigenschaften und Belastungsgrenzen des Fahrwerks, kann anhand der ermittelten Radkräfte in vorteilhafter Weise auf unfallbedingte Beschädigungen des Fahrwerks geschlossen werden. Diese Informationen können dann in vorteilhafter Weise an Sicherheitssysteme im Fahrzeug übertragen werden, welche aktiv in die Fahrzeugbewegung eingreifen können. Bei Bremsfunktionen kann beispielsweise unter Berücksichtigung der Informationen über das Ausmaß von Aufhängungsbeschädigungen die Bremskraft so eingestellt werden, dass aufgrund unterschiedlicher Bremskräfte an beiden Fahrzeugseiten kein zu großes Giermoment aufgebaut wird. Für konventionelle Fahrdynamikregelungen können die Informationen über beschädigte Räder ebenfalls verwendet werden. Kann ein bestimmtes Rad beispielsweise nicht mehr wie üblich zur Stabilisierung eingesetzt werden, so könnte das Elektronische Stabilitätsprogramm (ESP) beispielsweise eine angepasste Regelungsstrategie anwenden, die ohne das beschädigte Rad auskommt. Zudem kann durch ein Sperren eines beschädigten Rades für Bremseingriffe verhindert werden, dass Bremsflüssigkeit verloren geht, und damit das Bremssystem bzw. ein Bremskreis möglicherweise völlig versagt. Im Falle einer erkannten Beschädigung einer gelenkten Achse, die von einem lenkungsbasierten Fahrdynamikregelungssystem für Stabilisierungseingriffe genutzt wird, kann die Fahrdynamikregelung so umparametriert werden, dass beispielsweise anstelle der Lenkeingriffe nur noch Bremseingriffe an den unbeschädigten Rädern eingesetzt werden.

In Ausgestaltung der erfindungsgemäßen Anordnung kann der mindestens eine Radsensor im Radlager und/oder an der Felge und/oder im Reifen und/oder an Aufhängungspunkten einer Achskonstruktion angeordnet werden. An den Aufhängungspunkten der Achskonstruktion können die Radsensoren beispielsweise als kraftsensierende Bolzen ausgeführt werden, die vorzugsweise an Befestigungspunkten der Querlenker angeordnet sind. Aus den ermittelten Radkräften können beispielsweise wirkende Querkräfte und/oder Längskräfte und/oder Vertikalkräfte und/oder zugehörige Drehmomente um eine Querachse und/oder eine Längsachse und/oder eine Hochachse bestimmt werden.

Vorteilhafte Ausführungsformen der Erfindung sind in den Zeichnungen dargestellt und werden nachfolgend beschrieben. In den Zeichnungen bezeichnen gleiche Bezugszeichen Komponenten bzw. Elemente, die gleiche bzw. analoge Funktionen ausführen.

### Kurze Beschreibung der Zeichnungen

Figur 1 zeigt ein schematisches Blockdiagramm eines Fahrzeugs mit einem ersten Ausführungsbeispiel einer erfindungsgemäßen Anordnung zur Aktivierung von Insassenschutzmitteln eines Insassenschutzsystems in einem Fahrzeug.

Figur 2 zeigt ein schematisches Blockdiagramm eines Fahrzeugs mit einem zweiten Ausführungsbeispiel einer erfindungsgemäßen Anordnung zur Aktivierung von Insassenschutzmitteln eines Insassenschutzsystems in einem Fahrzeug.

### Ausführungsformen der Erfindung

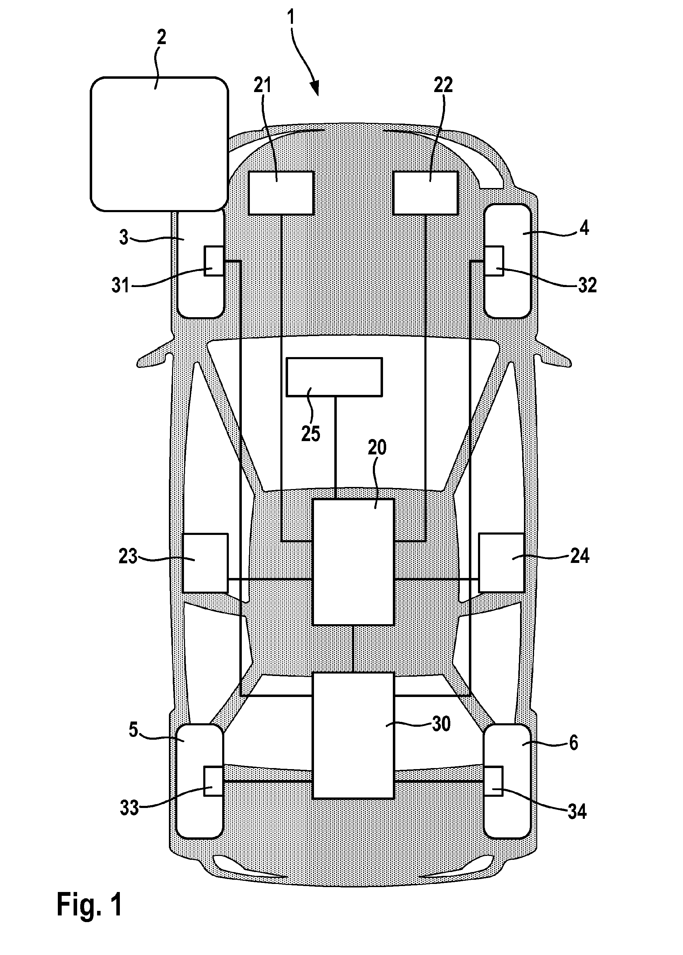

Wie aus Fig. 1 ersichtlich ist, umfasst ein Insassenschutzsystem für ein Fahrzeug 1 mehrere Sensoren 21, 22, 23, 24 zur Erfassung von unfallrelevanten Informationen, eine Auswerte- und Steuereinheit 20 und Insassenschutzmittel 25, die beispielsweise als irreversible Rückhaltesysteme, wie z. B. Airbags, pyrotechnische Gurtstraffer usw., und/oder reversible Rückhaltesysteme, wie z. B. elektromotorische Gurtstraffer usw., ausgeführt sind. Die verschiedenen Komponenten des Insassenschutzsystems sind zur Kommunikation auf bekannte Weise über entsprechende elektrische Verbindungen, die beispielsweise als Bussystem ausgeführt sind, miteinander verbunden.

Im dargestellten Ausführungsbeispiel sind zwei Sensoren 21, 22 im Frontbereich des Fahrzeugs 1 und jeweils ein Sensor 23, 24 ist im linken bzw. rechten Seitenbereich des Fahrzeugs 1 in Höhe der B-Säule angeordnet. Die vorliegende Erfindung ist aber nicht auf die dargestellte Anzahl von Sensoren 21, 22, 23, 24 beschränkt, so dass mehr oder weniger als vier Sensoren 21, 22, 23, 24 zur Erfassung von unfallrelevanten Informationen verwendet werden können. Für die Sensoren 21, 22, 23, 24 können die verschiedensten Sensorprinzipien, wie beispielsweise Beschleunigungs-, Druck-, Körperschallsensoren, piezoelektrische und/oder optische Sensoren usw. angewendet werden. Die Auswerte- und Steuereinheit 20 des Insassenschutzsystems wertet die erfassten unfallrelevanten Informationen der Sensoren 21, 22, 23, 24 zur Erkennung eines Unfalls aus.

Wie weiter aus Fig. 1 ersichtlich ist, umfasst das Fahrzeug 1 ein Radkraftsensorsystem, das über mehrere Radsensoren 31, 32, 33, 34 zusätzliche Informationen erfasst, aus welchen eine zugehörige Auswerte- und Steuereinheit 30 Kräfte ermittelt, welche über die Räder 3, 4, 5, 6 auf das Fahrzeug 1 wirken. Auch die verschiedenen Komponenten des Radkraftsensorsystems sind zur Kommunikation auf bekannte Weise über entsprechende elektrische Verbindungen, die beispielsweise als Bussystem ausgeführt sind, miteinander verbunden. Im dargestellten Ausführungsbeispiel ist jeweils ein Radsensor 31, 32, 33, 34 an einem entsprechenden Rad 3, 4, 5, 6 angeordnet. Die vorliegende Erfindung ist aber nicht auf die dargestellte Anzahl von Radsensoren 31, 32, 33, 34 beschränkt, so dass mehr oder weniger als vier Radsensoren 31, 32, 33, 34 zur Erfassung von zusätzlichen Informationen verwendet werden können. Die Radsensoren 31, 32, 33, 34 können beispielsweise im Radlager und/oder an der Felge und/oder im Reifen und/oder an Radaufhängungskomponenten angeordnet werden. Zur Anordnung an Aufhängungspunkten einer Achskonstruktion können die Radsensoren 31, 32, 33, 34 beispielsweise als kraftsensierende Bolzen ausgeführt werden, die vorzugsweise an Befestigungspunkten der Querlenker angeordnet sind. Aus den ermittelten Radkräften, die aus den von den Radsensoren 31, 32, 33, 34 erfassten Informationen ermittelt werden, welche beispielsweise an den Rädern 2, 3, 4, 5 wirkende Momente umfassen, können unter Berücksichtigung der Fahrzeuggeometrie, beispielsweise wirkende Querkräfte Fy, und/oder Längskräfte Fy und/oder Vertikalkräfte Fz und/oder zugehörige Drehmomente My, Mx, Mz um eine Fahrzeugquerachse y und/oder eine Fahrzeuglängsachse x und/oder eine Fahrzeughochachse z bestimmt werden. Zudem kommuniziert die Auswerte- und Steuereinheit 30 des Radkraftsensorsystems über eine entsprechende elektrische Verbindung mit der Auswerte- und Steuereinheit 20 des Insassenschutzsystems, welche die ermittelten Radkräfte zur Erkennung eines Unfalls und zur Aktivierung der Insassenschutzmittel 25 auswertet. Bei einer alternativen nicht dargestellten Ausführungsform der vorliegenden Erfindung kann die Auswerte- und Steuereinheit 20 des Insassenschutzsystems die von den Radsensoren 31, 32, 33, 34 erfassten Informationen direkt empfangen und zur Ermittlung der aktuell wirkenden Radkräfte auswerten.

Der Kern der Erfindung besteht in der zusätzlichen Nutzung des im Fahrzeug 1 verbauten Radkraftsensorsystems zur Unfallerkennung. Die zugehörigen Radsensoren 31, 32, 33, 34 ermitteln, beispielsweise durch Messung der Verformung der Radlagerschalen, die über die Räder 3, 4, 5, 6 auf das Fahrzeug 1 wirkenden Radkräfte. Wird das Fahrzeug 1 bei einem Unfall in der Nähe tragender Strukturen getroffen, lässt sich der Aufprall mit einem solchen Objekt mit den Sensoren 21, 22, 23, 24 des Insassenschutzsystems vergleichsweise gut detektieren. Wird ein Fahrzeug 1 hingegen, wie in dem in Fig. 1 dargestellten Ausführungsbeispiel, beispielsweise am nicht sehr steifen Stoßfänger getroffen, führt dies zunächst nicht zu besonderes großen Bewegungssignalen, die von den Sensoren 21, 22, 23, 24 des Insassenschutzsystems erfasst werden können. Bei dem gezeigten Offset-Front-Crash kann die Kollision mit dem Objekt 2 basierend auf den Sensoren 21, 22, 23, 24 des Insassenschutzsystems nur schwer erkannt werden, weil zunächst nur weiche Strukturen in die Kollision involviert sind. Wird jedoch ein Rad 3, 4, 5, 6, hier das Rad 3 vorne links, durch die Kollision mit dem Objekt 2 und die Deformation des Radkastens in Mitleidenschaft gezogen, können die veränderten wirkenden Radkräfte mit Hilfe des Sensors 31 des Radkraftsensorsystems erkannt werden. Dadurch wird ermöglicht, dass die Insassenschutzmittel 25 entsprechend der erkannten Situation ausgelöst werden.

Die von den Radsensoren 31, 32, 33, 34 erfassten zusätzlichen Informationen bzw. die daraus ermittelten Radkräfte werden über die im Fahrzeug 1 vorhandenen Kommunikationswege, wie z. B. ein CAN-Bussystem, an die Auswerte- und Steuereinheit 20 des Insassenschutzsystems übermittelt. Die Auswerte- und Steuereinheit 20 des Insassenschutzsystems wertet die Radkraftinformationen wie die Messgrößen der eigenen Sensoren 21, 22, 23, 24 zur Erkennung eines Unfalls aus. Optional können weitere zusätzliche Informationen von anderen Fahrzeugsystemen, wie z. B. von Fahrdynamikregelungssystemen, eingelesen werden. Dadurch kann ermittelt werden, welche Radkräfte zum Beispiel aufgrund eines Bremsmanövers vorliegen müssten. Weichen die Messwerte der Radsensoren 31, 32, 33, 34 davon signifikant ab, kann auf das Vorliegen eines Unfalls und auf dessen Schwere geschlossen werden.

Erkennt das Insassenschutzsystem mit Hilfe seiner Kollisionssensoren 21, 22, 23, 24 einen potenziellen Unfall, dann überprüft die Auswerte- und Steuereinheit 20, ob die gemessenen Sensorsignale, insbesondere die gemessenen bzw. ermittelten Beschleunigungswerte, auf die ermittelten Radkräfte zurückzuführen sind, wobei hierzu beispielsweise der Zusammenhang F=m*a genutzt werden kann. Entspricht die aus Fahrzeugmasse und der gemessenen bzw. ermittelten Beschleunigung berechnete Summe F der auf das Fahrzeug 1 wirkenden Kräfte näherungsweise der Summe der ermittelten Radkräfte, dann kann darauf geschlossen werden, dass die Kräfte nicht wie bei einer Kollision mit einem Objekt über die Karosserie, sondern über die Räder 2, 3, 4, 5 in das Fahrzeug 1 eingeleitet wurden, und es sich somit um einen Misuse-Fall handelt. Somit können Misuse-Fälle, wie Borsteinanprallen oder Bordsteinüberfahrten, durch die kombinierte Auswertung der Sensoren 21, 22, 23, 24 des Insassenschutzsystems und der Radsensoren 31, 32, 33, 34 besser von echten Unfällen unterschieden werden, da sich die mit den Sensoren 21, 22, 23, 24 des Insassenschutzsystems gemessenen Beschleunigungswerte auf die ermittelten Radkräfte zurückführen lassen. Dadurch wird es in vorteilhafter Weise möglich, eine beschleunigungsbasierte Unfallerkennung des Insassenschutzsystems empfindlicher einzustellen, um auch leichtere Kollisionen erkennen zu können, so dass neue beispielsweise reversible Rückhaltemittel oder Assistenzfunktionen auch bei leichteren Unfällen angesteuert werden können. Zusätzlich kann eine Kommunikationsbeziehung zu einem in Fig. 1 nicht dargestellten elektronischen Stabilitätsprogrammsystem (ESP-System) bestehen, welches gezielt auf die Fahrzeugbewegung einwirken kann, wenn beispielsweise ein Bordsteinanprall erkannt wurde.

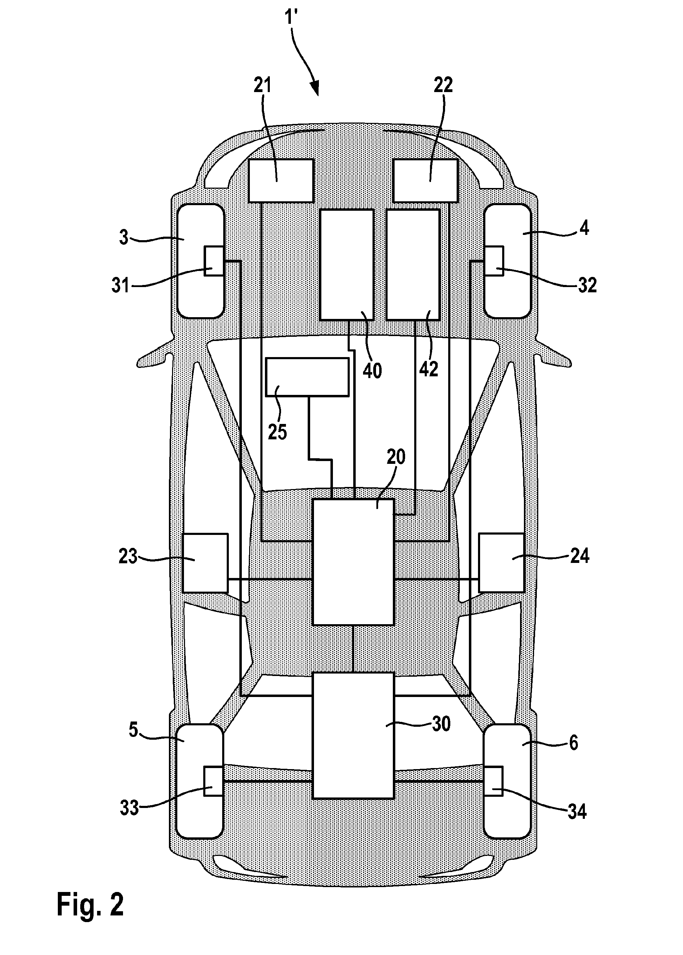

Figur 2 zeigt ein schematisches Blockdiagramm eines Fahrzeugs 1' mit einem zweiten Ausführungsbeispiel einer erfindungsgemäßen Anordnung zur Aktivierung von Insassenschutzmitteln 25 eines Insassenschutzsystems, das im Wesentlichen dem in Fig. 1 dargestellten ersten Ausführungsbeispiel entspricht, so dass zur Vermeidung von Wiederholungen auf eine detaillierte Beschreibung der übereinstimmenden Komponenten verzichtet wird. Zusätzlich zu den in Fig. 1 dargestellten Komponenten umfasst die in Fig. 2 dargestellte Anordnung zur Aktivierung von Insassenschutzmitteln 25 eines Insassenschutzsystems zwei Fahrzeugsicherheitssysteme 40, 42, welche bei Bedarf aktiv in die Fahrzeugbewegung eingreifen können. Die beiden Sicherheitssysteme sind beispielsweise als aktives Lenksystem 40 und/oder als ESP-System 42 ausgeführt.

Zusätzlich zu den bereits unter Bezugnahme auf Fig. 1 beschriebenen Funktionen, kann die Auswerte- und Steuereinheit 20 des Insassenschutzsystems die Informationen über die ermittelten Radkräfte zur Ermittlung von Unfallschäden am Fahrwerk des Fahrzeugs 1' auswerten und die ermittelten Informationen über Unfallschäden am Fahrwerk an die Sicherheitssysteme 40, 42 im Fahrzeug übertragen, welche die empfangenen Informationen bei einem aktiven Eingriff in die Fahrzeugbewegung berücksichtigen.

Da mit Hilfe der Radkraftsensoren 31, 32, 33, 34 direkt die auf das Fahrwerk des Fahrzeugs 1' wirkenden Kräfte gemessen werden können, können die Informationen über diese wirkenden Kräfte in vorteilhafter Weise zur Ermittlung von Beschädigungen am Fahrzeug 1' verwendet werden, die beispielsweise durch eine Kollision hervorgerufen werden. Unter Berücksichtigung der konstruktiv bedingten Eigenschaften und Belastungsgrenzen, kann anhand der ermittelten Kräfte auf die unfallbedingten Beschädigungen des Fahrwerks geschlossen werden. Diese Informationen sind für die Sicherheitssysteme 40, 42, die in die Fahrzeugbewegung eingreifen, von großer Bedeutung. So kann beispielsweise bei Bremsfunktionen in Kenntnis des Ausmaßes von Beschädigungen an der Aufhängung, die Bremskraft so eingestellt werden, dass aufgrund von unterschiedlich eingestellten Bremskräften an beiden Fahrzeugseiten kein zu großes Giermoment aufgebaut wird. Für eine konventionelle Fahrdynamikregelung ist die Information über beschädigte Räder 2, 3, 4, 5 ebenfalls von Bedeutung. Kann beispielsweise ein bestimmtes Rad 2, 3, 4, 5 nicht mehr wie üblich zur Stabilisierung eingesetzt werden, dann kann das ESP-System 42 beispielsweise eine angepasste Regelungsstrategie anwenden, die ohne das beschädigte Rad 2, 3, 4, 5 auskommt. Durch ein Sperren eines beschädigten Rades 2, 3, 4, 5 für Bremseingriffe kann in vorteilhafter Weise verhindert werden, dass Bremsflüssigkeit verloren geht und damit das Bremssystem bzw. ein Bremskreis möglicherweise völlig versagt. Im Falle einer erkannten Beschädigung einer gelenkten Achse, die von einem lenkungsbasierten Fahrdynamikregelungssystem 40 für Stabilisierungseingriffe genutzt wird, kann die Fahrdynamikregelung so umparametriert werden, dass beispielsweise anstelle der Lenkeingriffe nur noch Bremseingriffe an den unbeschädigten Rädern 2, 3, 4, 5 eingesetzt werden.

Die von den Radsensoren 31, 32, 33, 34 erfassten zusätzlichen Informationen bzw. die daraus ermittelten Radkräfte werden über die im Fahrzeug 1' vorhandenen Kommunikationswege, wie z. B. einen CAN-Bus, an die Auswerte- und Steuereinheit 20 des Insassenschutzsystems übermittelt. Die Auswerte- und Steuereinheit 20 des Insassenschutzsystems wertet die Radkraftinformationen wie die Messgrößen der eigenen Sensoren 21, 22, 23, 24 zur Bestimmung von Ort und Ausmaß von Fahrzeugbeschädigungen aus. Dies kann beispielsweise dadurch erfolgen, dass die ermittelten Radkräfte mit zulässigen Maximalbelastungen verglichen werden. Sobald diese Werte überschritten werden, erkennt die Auswerte- und Steuereinheit 20 eine Beschädigung des korrespondierenden Rads 2, 3, 4, 5. Die so ermittelten Informationen über Beschädigungen des Fahrzeugs 1', insbesondere der Radaufhängungen, werden über die elektrischen Kommunikationsverbindungen an die Sicherheitssysteme 40, 42 übermittelt. Diese Systeme 40, 42 werden dann wie oben beschrieben in Abhängigkeit des ermittelten Schadensbildes umparametriert. Im dargestellten Ausführungsbeispiel ermittelt die Auswerte- und Steuereinheit 20 des Insassenschutzsystems das Schadensbild des Fahrzeugs 1'. Alternativ können die Radkraftinformationen auch an andere nicht dargestellte Steuergeräte übermittelt werden, welche dann die erfindungsgemäße Bestimmung des Schadensbildes übernehmen können. Durch die Berücksichtung der Beschädigungen einer Kollision können in vorteilhafter Weise Funktionen implementiert werden, die nach der Erkennung der ersten Kollision durch das Insassenschutzsystem eine Bremsung auslösen, um mögliche Folgekollisionen abzumildern, da eine Verfügbarkeit von solchen Funktion nur dann gegeben ist, wenn die Beschädigungen am Fahrzeug 1' nicht zu schwerwiegend sind, also insbesondere die Bremshydraulik sowie Räder 3, 4, 5, 6 und Radaufhängungen durch die erste Kollision nicht zerstört wurden.

Durch das erfindungsgemäße Verfahren und die erfindungsgemäße Anordnung werden in vorteilhafter Weise die im Fahrzeug verbauten Radsensoren zur Kollisionserkennung bzw. zur Unfallerkennung verwendet. Durch die kombinierte Auswertung der Informationen der Sensoren des Insassenschutzsystems und der Radsensoren wird in vorteilhafter Weise eine bessere Unterscheidung von Misuse- und Use-Fällen ermöglicht. Zudem können über die ermittelten Radkräfte Unfallschäden am Fahrwerk des Fahrzeugs erkannt, und die Informationen über die erkannten Unfallschäden können von Fahrzeugsicherheitssystemen verwendet werden.

## Patentansprüche

1. Verfahren zur Aktivierung von Insassenschutzmitteln (25) in einem Fahrzeug (1, 1'), bei welchem zur Erkennung eines Unfalls unfallrelevante Informationen erfasst und ausgewertet werden, **dadurch gekennzeichnet, dass** an den Rädern (3, 4, 5, 6) des Fahrzeugs (1) zusätzliche Informationen erfasst werden, aus welchen Kräfte ermittelt werden, die über die Räder (3, 4, 5, 6) auf das Fahrzeug (1) wirken, wobei Informationen über die ermittelten Radkräfte zur Erkennung eines Unfalls und zur Aktivierung der Insassenschutzmittel (25) und/oder von anderen aktiven Sicherheitssystemen (40, 42) ausgewertet werden.

2. Verfahren nach Anspruch 1, **dadurch gekennzeichnet, dass** die Informationen über die ermittelten Radkräfte zur Unterscheidung von Gefahrenfällen, in welchen die Insassenschutzmittel (25) aktiviert werden, und von Misuse-Fällen ausgewertet werden, in welchen die Insassenschutzmittel (25) nicht aktiviert werden.

3. Verfahren nach Anspruch 1 oder 2, **dadurch gekennzeichnet, dass** die Informationen über die ermittelten Radkräfte zur Ermittlung von Unfallschäden am Fahrwerk des Fahrzeugs (1, 1') ausgewertet werden.

4. Verfahren nach Anspruch 3, **dadurch gekennzeichnet, dass** die ermittelten Informationen über Unfallschäden am Fahrwerk des Fahrzeugs (1') an Sicherheitssysteme (40, 42) im Fahrzeug (1') übertragen werden, welche aktiv in die Fahrzeugbewegung eingreifen.

5. Verfahren nach einem der Ansprüche 1 bis 4, **dadurch gekennzeichnet, dass** aus den ermittelten Radkräften wirkende Querkräfte und/oder Längskräfte und/oder Vertikalkräfte und/oder zugehörige Drehmomente um eine Querachse und/oder eine Längsachse und/oder eine Hochachse bestimmt werden.

6. Anordnung zur Aktivierung von Insassenschutzmitteln (25) eines Insassenschutzsystems in einem Fahrzeug (1, 1'), insbesondere zur Durchführung des Verfahrens nach einem der Ansprüche 1 bis 5, wobei das Insassenschutzsystem mindestens einen Sensor (21, 22, 23, 24) zur Erfassung von unfallrelevanten Informationen und eine Auswerte- und Steuereinheit (20) umfasst, welche die erfassten unfallrelevanten Informationen zur Erkennung eines Unfalls auswertet, **dadurch gekennzeichnet, dass** mindestens ein Radsensor (31, 32, 33, 34) eines Radkraftsensorsystems zusätzliche Informationen erfasst, aus welchen Kräfte ermittelbar sind, welche über die Räder (3, 4, 5, 6) auf das Fahrzeug (1, 1') wirken, wobei die Auswerte- und Steuereinheit (20) des Insassenschutzsystems die ermittelten Radkräfte zur Erkennung eines Unfalls und zur Aktivierung der Insassenschutzmittel (25) und/oder von anderen aktiven Sicherheitssystemen auswertet.

7. Anordnung nach Anspruch 6, **dadurch gekennzeichnet, dass** der mindestens eine Radsensor (31, 32, 33, 34) im Radlager und/oder an der Felge und/oder im Reifen und/oder an einem Aufhängungspunkt einer Achskonstruktion angeordnet ist.

8. Anordnung nach Anspruch 6 oder 7, **dadurch gekennzeichnet, dass** eine Auswerte- und Steuereinheit (30) des Radkraftsensorsystems aus den erfassten zusätzlichen Informationen die über die Räder (3, 4, 5, 6) auf das Fahrzeug (1) wirkenden Kräfte ermittelt und die Informationen über die ermittelten Radkräfte an die Auswerte- und Steuereinheit (20) des Insassenschutzsystems überträgt.

9. Anordnung nach einem der Ansprüche 6 bis 8, **dadurch gekennzeichnet, dass** die Auswerte- und Steuereinheit (20) des Insassenschutzsystems die Informationen über die ermittelten Radkräfte zur Ermittlung von Unfallschäden am Fahrwerk des Fahrzeugs (1') auswertet und die ermittelten Informationen über Unfallschäden am Fahrwerk des Fahrzeugs (1') an Sicherheitssysteme (40, 42) im Fahrzeug überträgt, welche aktiv in die Fahrzeugbewegung eingreifen.

10. Anordnung nach Anspruch 9, **dadurch gekennzeichnet, dass** die Sicherheitssysteme im Fahrzeug ein aktives Lenksystem (40) und/oder ein ESP-System (42) umfassen.
